# EUROPÄISCHE PATENTSCHRIFT

(11) **EP 0 371 272 B1**
(45) Veröffentlichungstag und Bekanntmachung des Hinweises auf die Patenterteilung: **28.07.1993**
(21) Anmeldenummer: 89120291.3
(22) Anmeldetag: 02.11.1989
(51) Int. Cl.: A61C 19/05

(54) **Vorrichtung zur Distrahierung der Backenzähne und Fixierung der Kiefergelenke in zentrischer Relation**
Device for determining the centric occlusion of molars
Dispositif pour la prise d'occlusion de molaires

(30) Priorität: 30.11.1988 DE 3848350
(43) Veröffentlichungstag der Anmeldung: 06.06.1990
(73) Patentinhaber: GIRRBACH-DENTAL GMBH, D-75177 Pforzheim (DE)
(72) Erfinder: Woelfel, Julian B., Prof.-Dr.-D.D.S., Columbus Ohio 43214 (US)
(74) Vertreter: Frank, Gerhard, Dipl.-Phys.

(56) Entgegenhaltungen:
- WO-A-86/03670

## Beschreibung

Die Erfindung betrifft eine Vorrichtung, mit deren Hilfe die Backenzähne außer Kontakt gebracht werden, um den durch Zahnkontakt erzeugten Infomationstransfer innerhalb des neuromuskulären Nervensystems im Bereich der Kauapparatur zu unterbrechen und gleichzeitig den Unterkiefer in zentrischer Gelenkposition bei einem kleinstmöglichen Öffnungswinkel zu fixieren. Unter der zentrischen Kieferrelation versteht man die Position der Kiefergelenke, aus der heraus der Unterkiefer eine reine Rotationsbewegung beschreibt. Sie ist die Ausgangslage für jeden peripheren Bewegungszustand. Diese Gelenkposition ist eine eminent wichtige Meßgröße in der Prothetik, weil sie als Ausgangspunkt jeder Unterkieferbewegung sozusagen den Meßpunkt Null verkörpert. Bei der Übertragung des Ober- und Unterkiefermodells in einen Bewegungssimulator (Artikulator) muß eine Zahnreihe, beispielsweise die des Oberkiefers, patientenanalog der Rotationsachse des Artikulators zugeordnet werden und in einer zweiten Arbeitsphase der Unterkiefer dem bereits einartikulierten Oberkiefer in eben dieser zentrischen Relation zugeordnet werden. Damit sind zwischen Bewegungssimulator und Patient weitgehend einheitliche geometrische Voraussetzungen für die Bewegungssimulation gegeben.

Die Unterbrechung des Informationstransfers innerhalb des neuromuskulären Nervensystems (Deprogrammierung) hat den Zweck, störende Einflüsse (Frühkontakte, Fenlfunktionen) in der Diagnosephase zu erkennen und sie in der Phase der Bißnahme in zentrischer Relation zu unterbinden.

Durch die Einführung einer geeigneten Vorrichtung zwischen die Frontzähne des Ober- und Unterkiefers wird die stufenlose Aufhebung der Zahnkontakte erreicht, und die beiden Kiefergelenke bei entsprechender Kopfhaltung zwangsweise in zentrische Position gebracht (äußerste Position dorsal/cranial) und durch die Abstützung der Frontzähne auf dieser Vorrichtung in dieser Position gehalten.

Für den vorgenannten Zweck hat man bisher als geeignete Vorrichtung beispielsweise Fühierlehren verwendet, die aus hygienischen Gründen und wegen Verletzungsgefahr anstelle von Metallfolien dünne Kunststoffplättchen bündelweise zusammenfaßten, die jedoch entgegen der im Werkzeugbau bekannten Fühlerlehren einheitliche Folienstärken aufwiesen. Diese Fühlerlehren sind etwas unständlich im Gebrauch, die berötigte Stärke zur Distanzierung der Frontzähne muß ständig durch Einführen und wieder Herausziehen, Ergänzen oder Reduzieren der Blättchen korrigiert und eingestellt werden. Das gefundene Distanzmaß wird durch Abzählen der benötigten Menge Blättchen festgehalten. Diese Fühlerlehre ist problematisch zu sterilisieren.

In dem Aufsatz "New device for accurately recording centric relation" in "Craniomandibular Function and Dysfunction", Dez. 1986, Volume 56, Nr. 6, Seiten 716 ff. ist eine Zustandsbeschreibung einiger Methoden und Vorrichtungen zur Registrierung der Kieferrelation in zentrischer Position gegeben.

Die Vorrichtung nach Anspruch 1 geht aus von einer in obigem Aufsatz beschriebenen und dargestellten (insbes.Figur 8) Vorrichtung, bei welcher eine Anzahl von Papierstreifen benutzt wird, die an einer Schmalseite miteinander verbunden sind, so daß sie die Form eines langen und schmalen Buches bzw. Heftes annehmen. Die einzelnen "Blätter" dieses Buches sind unterschiedlich gefärbt und damit als unterschiedlich starke Blocks markiert, so daß bestimmte Standarddicken zusammengestellt werden können. Da nun die Frontzähne einerseits nun mindestens so weit distanziert werden müssen, um die Backenzähne außer Kontakt zu bringen, andererseits jedoch der möglichst geringste Öffnungswinkel (zur Vermeidung einer Vorwärtsbewegung der Kiefergelenke) anzustreben ist, müssen nun so lange einzelne Blättchen entfernt oder hinzugefügt werden, bis beide Ziele (außer Zahnkontakt bei minimalster Öffnung) erreicht sind.

Die Handhabung dieses Papierheftchens ist relativ umständlich durch das Ab- und Zugeben von einzelnen Blättchen, die Genauigkeit ist durch die Nachgiebigkeit des Papiers oder des Übereinandergleitens der Papierschichten in Frage gestellt. Das Festlegen der tatsächlichen Stärke ist erschwert und damit auch die Reproduzierbarkeit bei späteren Maßnahmen nicht sichergestellt.

Da dieses Papier nur einmalig benutzbar ist, ist der Gebrauch dieser Vorrichtung auch relativ teuer.

Aus der Wo-A-86/03670 ist eine dentale Hilfseinrichtung zur Feststellung des Abstandes zweier gegenüberliegender Zähne bekannt, um eine ordnungsgemäße Herstellung einer Krone auf einem der (präparierten) Zähne (oder beiden) zu ermöglichen, da hierfür gewisse Mindestabstände erforderlich sind. Die vorbekannte Hilfseinrichtung besteht aus mehreren in einem Block zusammengefaßten Kunststoffstreifen verschiedener Dicke.

Einer dieser Streifen wird zwischen die beiden Zähne eingelegt und die zentrische Relation hergestellt. Der Zwischenraum zwischen den gegenüberliegenden Zähnen ist dann einigermaßen zuverlässig bestimmt, wenn der ausgewählte Streifen sich unter Verformung, aber noch leicht zwischen den gegenüberliegenden Zähnen herausziehen läßt.

Abgesehen vom unterschiedlichen Einsatzgebiet weist diese Hilfsvorrichtung die gleichen grundsätzlichen Nachteile auf, wie die oben beschriebenen Vorrichtungen, nämlich insbesondere umständliche Handhabung und nur bedingte Genauigkeit des Meßergebnisses.

Aufgabe der Erfindung ist es daher, eine einfache Vorrichtung zum genannten Zweck zu schaffen, die genaue, zuverlässig reproduzierbare Registrierungen ermöglicht.

Erfindungsgemäß weist die Vorrichtung hierzu ein bogenförmiges Formstück mit den im Anspruch 1 angegebenen Merkmalen auf.

Ein solches Formstück ist einfach herzustellen und äußerst einfach und präzise im Gebrauch: Da die Dicke des zur Messung herausgezogenen vorderen Abschnittes bei einer Ausführungsform der Vorrichtung auf eine Länge von etwa 50 mm von 0 bis 4 mm zunimmt, entsprechen bereits geringe Änderungen der Dicke der Vorrichtung wesentlich größeren und damit auch leicht erkennbaren und ablesbaren Änderungen der Position der Schneidezähne auf der Oberfläche des Formstückes (beim dargestellten Beispiel ergibt sich hieraus ein Übersetzungsverhältnis von etwa 1 zu 12, d.h. eine Änderung in der Dicke des Formstückes von 1 mm bedeutet eine entsprechende Änderung einer Markierung auf seiner Oberfläche um etwa 1,2 cm).

Mit diesem Formstück lassen sich demnach äußerst schnell und einfach, dabei präzise und durch die Meßskala reproduzierbare Messungen bzw. Gelenkspositionierungen vornehmen.

Eine Ausgestaltung der Vorrichtung sieht vor, daß die Unterseite des Formstückes zumindest in seinem vorderen Abschnitt kreisbogenförmig ausgebildet ist. Damit ist gewährleistet, daß das Formstück bei seiner Einführung zwischen die oberen und unteren Schneidezähne nicht in der Mundhöhle palatinal (gaumenseitig) anstößt.

Eine weitere Ausgestaltung sieht vor, daß der Querschnitt des zur Messung verwendeten vorderen Abschnittes des Formstückes rhombusförmig mit abgerundeten Ecken ist.

Die Rhombusform ermöglicht eine zusätzliche Zentrierung des Formstückes bei der Messung im Spalt zwischen den beiden oberen und den beiden unteren Schneidezähnen, eine Vorkehrung die zur Definition einer reproduzierbaren Lage und damit eines reproduzierbaren Meßergebnisses wesentlich beiträgt.

Weiterhin ist vorteilhafterweise vorgesehen, daß die Dicke des vorderen Abschnittes als Markierung auf dessen Oberseite angegeben ist, so daß das Meßergebnis leicht abgelesen werden kann. Wenn die Markierungen in Form von Nuten oder Kerben vorgesehen sind, ermöglicht dies das Festhalten der Vorrichtung zwischen den Schneidezähnen in einer bestimmten Position, beispielsweise zur kurzzeitigen Entspannung der Kiefermuskulatur.

Weitere Ausgestaltungen der erfindungsgemäßen Vorrichtung sind weiteren Unteransprüchen zu entnehmen.

Ein Ausführungsbeispiel der erfindungsgemäßen Vorrichtung wird anhand von Zeichnungen näher erläutert, es zeigen:
- Figur 1:: Eine Seitenansicht der Vorrichtung,
- Figur 2:: eine Aufsicht auf die Vorrichtung mit zwei Querschnittdarstellungen,
- Figur 3:: eine Vorderansicht auf die Vorrichtung, und
- Figur 4:: eine schematische Darstellung des Gebrauchs der Vorrichtung.

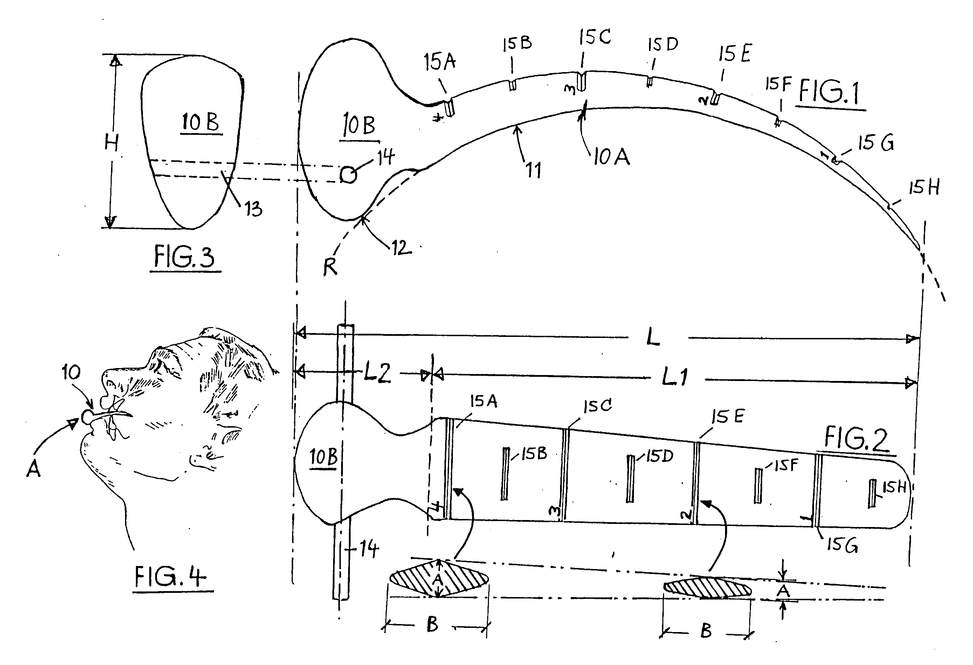

Die Vorrichtung besteht aus einem Formstück 10, dessen vorderer Abschnitt 10A mit der Lange L1 zur Messung, d.h., zur Einführung zwischen die oberen und unteren Schneidezähne des Patienten dient (Figur 4), und dessen hinterer Abschnitt 10B mit der Länge L2 als Griffstück zur Handhabung durch den Zahnarzt ausgebildet ist. Die Unterseite des vorderen Abschnittes 10A ist kreisbogenförmig mit einem Radius R ausgebildet, seine Oberseite ebenfalls kreisbogenförmig mit einem etwas größeren Radius, so daß die Dicke des vorderen Abschnittes 10A beginnend von dessen vorderen Ende kontinuierlich bis zum Übergangsbereich in das Griffstück 10B zunimmt.

Beim dargestellten Ausführungsbeispiel besitzt der vordere Abschnitt 10A einen rhombischen Querschnitt, bei dem sowohl die vertikale Hauptachse A, als auch die horizontale Hauptachse B in Richtung auf das vordere Ende des vorderen Abschnittes 10A abnehmen, wie dies an zwei Querschnitten in Figur 2 dargestellt ist.

Auf der Oberseite des vorderen Abschnittes 10A sind Markierungen in Form von Nuten oder Kerben 15A...15H eingebracht, die eine unmittelbare Ablesung der Schneidezähne-Separation bei zentrischer Relation ermöglichen. Beim dargestellten Ausführungsbeispiel sind vier längere Kerben 15A,15C,15E und 15G vorgesehen, die jeweils die Dicke des Formstücks und damit die Schneidezähne-Separation von vier bzw. drei bzw. zwei bzw. ein Millimeter angeben, sowie vier dazwischen liegende, kürzere Kerben 15B,15D,15F,15H, die die entsprechenden Zwischenmarkierungen von 0,5 mm angeben.

Anhand des von den oberen Schneidezähnen abgedeckten bzw. freigelassenen Teils der derart gebildeten Meßskala kann der Zahnarzt somit schnell und präzise bis auf Bruchteile von Millimetern genau die Schneidezahn-Separation in zentrischer Position bestimmen.

Beim dargestellten Ausführungsbeispiel variiert die Dicke (vertikale Hauptachse A) des vorderen Abschnittes des Formstückes von 0 bis 4 mm und der Radius R beträgt 85 mm; es hat sich herausgestellt, daß mit dieser Version der Vorrichtung Messungen am Großteil der Patienten vorgenommen werden kann, d.h., daß sich bei einer Schneidezahn-Separation von bis zu 4 mm beim Großteil der Patienten die Distraktion der Backenzähne einstellt. Ergänzend hierzu kann eine (nicht dargestellte) Version verwendet werden, bei der die Dicke (vertikale Hauptachse A) des vorderen Abschnittes 10A von 0 bis 9 mm reicht bei einem Radius von R 103 mm. Hiermit lassen sich dann auch größere Distraktionen durchführen, allerdings mit einer geringfügig reduzierten Genauigkeit.

Im vorderen Abschnitt 10B, dem Griffstück, ist eine Bohrung 13 mit einem Justierstab vorgesehen. Die rechtwinkelige Ausrichtung dieser Justierstange 14 dient zur Überprüfung des horizontalen Verlaufes der transversalen Okklusionsebene.

Der Gebrauch der erfindungsgemäßen Vorrichtung geht dann wie folgt vonstatten (Figur 4): Der Patient legt zunächst seinen Kopf etwa um 45° nach hinten geneigt. In dieser Position zentrieren sich muskulär zwangsweise die beiden Gelenkköpfe des Unterkiefers hin zur Gelenkgrube. Die Vorrichtung wird so tief zwischen die Frontzähne geschoben, bis die Backenzähne außer Kontakt sind. Der Patient hält die Vorrichtung mit dem Unterkiefer unter leichtem Druck.

Wenn bei dieser Separation der Schneidezähne mit der 4 mm-Vorrichtung die Backenzähne immer noch Kontakt haben, sollte die zweite Version der Vorrichtung benutzt werden (mit bis zu 9 mm Distanzierung).

Es darf sich kein Kontakt mehr im Bereich der Backenzähne ergeben. Der Abstand der vorderen Schneidezähne kann reduziert werden, indem die Vorrichtung etwas nach außen gezogen wird, so daß der Abstand der Schneidezähne sich so weit reduziert, bis die Backenzähne nur mehr geringfügig distrahiert sind. Nach gegebenenfalls geringfügigen Korrekturen in einer von beiden Richtungen können Frühkontakte überprüft werden. Die Position der oberen Schneidezähne auf der Skala auf dem vorderen Abschnitt 10A ist das gewünschte Meßergebnis: Minimale Distraktion bei zentrierter Gelenksposition. Es wird für spätere, weitere diagnostische und therapeutische Zwecke festgehalten und ist jederzeit reproduzierbar und damit verifizierbar.

## Patentansprüche

1. Vorrichtung zur Distrahierung der Backenzähne bei gleichzeitiger Fixierung der beiden Kiefergelenke in zentrischer Relation durch Abstützung der unteren und oberen Schneidezähnen mittels der Einführung der in ihrer Dicke variablen Vorrichtung zwischen OK- und UK-Schneidezähnen, dadurch gekennzeichnet, daß sie aus einem bogenförmigen Formstück (10) besteht, dessen zwischen die Schneidezähne einzuführender vorderer Abschnitt (10A) in seiner Dicke (A) zum vorderen Ende hin abnimmt, und daß auf der Oberfläche des vorderen Abschnitts (10A) Markierungen (15A ...15H) vorgesehen sind, die die Dicke (A) des Formstückes angeben.

2. Vorrichtung nach Anspruch 1, dadurch gekennzeichnet, daß die Unterseite (11) des Formstückes (10) zumindest in seinem vorderen Abschnitt (10A) kreisbogenförmig ausgebildet ist.

3. Vorrichtung nach Anspruch 1 und 2, dadurch gekennzeichnet, daß sich an den vorderen Abschnitt (10A) ein hinterer Abschnitt (10B) (Griffstück) anschließt, dessen Unterkante (12) nicht über die Fortsetzung des Kreisbogens (R) der Unterseite (11) des vorderen Abschnittes (10A) hinausragt.

4. Vorrichtung nach Anspruch 3, dadurch gekennzeichnet, daß der Griffabschnitt (10B) eine horizontale Bohrung (13) aufweist, die eine Justierstange (14) aufnimmt.

5. Vorrichtung nach Anspruch 2, dadurch gekennzeichnet, daß der Radius des Kreisbogens (R) zwischen 70 und 120 mm beträgt.

6. Vorrichtung nach Anspruch 5, dadurch gekennzeichnet, daß der Radius (R) 85 mm beträgt.

7. Vorrichtung nach Anspruch 5, dadurch gekennzeichnet, daß der Radius 103 mm beträgt.

8. Vorrichtung nach Anspruch 1, dadurch gekennzeichnet, daß der vordere Abschnitt (10A) einen Querschnitt mit einer vertikalen Hauptachse (A) und einer horizontalen Hauptachse (B) aufweist.

9. Vorrichtung nach Anspruch 8, dadurch gekennzeichnet, daß der Querschnitt ellipsenförmig ist.

10. Vorrichtung nach Anspruch 8, dadurch gekennzeichnet, daß der Querschnitt rhombusförmig mit abgerundeten Ecken ist.

11. Vorrichtung nach Anspruch 1,6 oder 8, dadurch gekennzeichnet, daß die vertikale Hauptachse (A) über den vorderen Abschnitt (10A) kontinuierlich von 4 mm abwärts abnimmt.

12. Vorrichtung nach Ansprüchen 1,7 und 8, dadurch gekennzeichnet, daß die vertikale Hauptachse (A) über den vorderen Abschnitt (10A) kontinuierlich von 9 mm abwärts abnimmt.

13. Vorrichtung nach Anspruch 8, dadurch gekennzeichnet, daß die horizontale Hauptachse (B) ebenfalls zum Ende des vorderen Abschnitts (10A) hin abnimmt.

14. Vorrichtung nach Anspruch 1, dadurch gekennzeichnet, daß die Länge (L1) des vorderen Abschnittes (10A) 45 bis 50 mm beträgt.

15. Vorrichtung nach Anspruch 1, dadurch gekennzeichnet, daß die Größe der vertikalen Hauptachse (A) in gleichen Abständen als Markierung auf der Oberseite des vorderen Abschnitts (10A) angegeben ist.

16. Vorrichtung nach Anspruch 15, dadurch gekennzeichnet, daß die Markierungen Nuten oder Kerben (15A...15H) einschließen.

17. Vorrichtung nach Anspruch 15, dadurch gekennzeichnet, daß die Markierungen den Wert der vertikalen Hauptachse (A) in Abständen von jeweils 0,5 mm angeben.

## Claims

1. Device for avoiding contact of the molars, whilst simultaneously securing the two jawbones in a central position, by supporting the lower and upper incisors by the introduction of the device, which has a varying thickness, between the upper jaw incisors and the lower jaw incisors, characterised in that it includes an arcuate moulded part (10), the front portion (10A) of which is to be introduced between the incisors and decreases in respect of its thickness (A) towards the front end, and in that calibrations (15A ... 15H) are provided on the plane surface of the front portion (10A) and indicate the thickness (A) of the moulded part.

2. Device according to claim 1, characterised in that the underside (11) of the moulded part (10) is arcuate in at least its front portion (10A).

3. Device according to claims 1 and 2, characterised in that a rear portion (10B) (handle) communicates with the front portion (10A), the lower edge (12) of said rear portion not protruding beyond the extension of the arc (R) of the underside (11) of the front portion (10A).

4. Device according to claim 3, characterised in that the handle portion (10B) has a horizontal bore (13), which receives an adjustment rod (14).

5. Device according to claim 2, characterised in that the radius of the arc (R) is between 70 and 120 mm.

6. Device according to claim 5, characterised in that the radius (R) is 85 mm.

7. Device according to claim 5, characterised in that the radius is 103 mm.

8. Device according to claim 1, characterised in that the front portion (10A) has a cross-section with a vertical main axis (A) and a horizontal main axis (B).

9. Device according to claim 8, characterised in that the cross-section is elliptical.

10. Device according to claim 8, characterised in that the cross-section is rhomboidal with rounded corners.

11. Device according to claim 1, 6 or 8, characterised in that the vertical main axis (A) continuously decreases downwardly from 4 mm over the front portion (10A).

12. Device according to claims 1, 7 and 8, characterised in that the vertical main axis (A) continuously decreases downwardly from 9 mm over the front portion (10A).

13. Device according to claim 8, characterised in that the horizontal main axis (B) also decreases towards the end of the front portion (10A).

14. Device according to claim 1, characterised in that the length (L1) of the front portion (10A) is between 45 and 50 mm.

15. Device according to claim 1, characterised in that the size of the vertical main axis (A) is indicated at identical intervals as a calibration on the upper surface of the front portion (10A).

16. Device according to claim 15, characterised in that the calibrations include grooves or notches (15A ... 15H).

17. Device according to claim 15, characterised in that the calibrations indicate the value of the vertical main axis (A) at intervals of 0.5 mm each.

## Revendications

1. Dispositif pour l'écartement des molaires avec fixation simultanée des deux articulations maxillaires en relation centrée par le soutien des incisives inférieures et supérieures au moyen de l'introduction du dispositif à épaisseur variable entre les incisives des maxillaires supérieur et inférieur, **caractérisé en ce** qu'il se compose d'une élément profité (10) en forme d'arc dont la section antérieure (10A) à introduire entre les incisives diminue en épaisseur (A) en direction de l'extrémité antérieure, et que sur la surface de la section antérieure (10A) sont prévus des marquages (15A à 15H) qui indiquent l'épaisseur (A) de l'élément profité.

2. Dispositif selon la revendication 1, caractérisé en ce que la face inférieure (11) de l'élément profité (10) présente au moins dans la section antérieure (10A) une forme en arc de cercle.

3. Dispositif selon les revendications 1 et 2, caractérisé en ce que la section antérieure (10A) est suivie d'une section postérieure (10B) (section de préhension) dont le bord inférieur (12) ne dépasse pas du prolongement de l'arc de cercle (R) de la face inférieure (11) de la section antérieure (10A).

4. Dispositif selon la revendication 3, caractérisé en ce que la section de préhension (10B) présente un alésage horizontal (13) qui reçoit une broche d'ajustage (14).

5. Dispositif selon la revendication 2, caractérisé en ce que le rayon de l'arc de cercle (R) est compris entre 70 et 120 mm.

6. Dispositif selon la revendication 5, caractérisé en ce que le rayon (R) est de 85 mm.

7. Dispositif selon la revendication 5, caractérisé en ce que le rayon est de 103 mm.

8. Dispositif selon la revendication 1, caractérisé en ce que la section antérieure (10A) présente une section transversale avec un axe principal vertical (A) et un axe principal horizontal (B).

9. Dispositif selon la revendication 8, caractérisé en ce que la section transversale présente la forme d'une ellipse.

10. Dispositif selon la revendication 8, caractérisé en ce que la section transversale présente la forme d'un losange avec des coins arrondis.

11. Dispositif selon l'une des revendications 1, 6 ou 8, caractérisé en ce que l'axe principal vertical (A) diminue en continu sur la section antérieure (10A) à partir de 4 mm.

12. Dispositif selon l'une des revendications 1, 7 et 8, caractérisé en ce que l'axe principal vertical (A) diminue en continu sur la section antérieure (10A) à partir de 9 mm.

13. Dispositif selon la revendication 8, caractérisé en ce que l'axe principal horizontal (B) diminue également en direction de l'extrémité de la section antérieure (10A).

14. Dispositif selon la revendication 1, caractérisé en ce que la longueur (L1) de la section antérieure (10A) est de 45 à 50 mm.

15. Dispositif selon la revendication 1, caractérisé en ce que la grandeur de l'axe principal vertical (A) est indiquée à des intervalles identiques sous la forme de marquages sur la face supérieure de la section antérieure (10A).

16. Dispositif selon la revendication 15, caractérisé en ce que les marquages comportent des encoches ou entailles (15A à 15H).

17. Dispositif selon la revendication 15, caractérisé en ce que les marquages indiquent la valeur de l'axe principal vertical (A) à des intervalles de respectivement 0,5 mm.
